# EUROPEAN PATENT SPECIFICATION

(11) **EP 3 060 866 B1**
(45) Date of publication and mention of the grant of the patent: **18.09.2019**
(21) Application number: 14787199.0
(22) Date of filing: 24.10.2014
(51) Int. Cl.: F26B 3/12, B01D 1/18

(54) **GAS DISTRIBUTER FOR A CONVECTIVE DRYER HAVING IMPROVED RADIAL GAS VELOCITY CONTROL**
GASVERTEILER FÜR EINEN KONVEKTIONSTROCKNER MIT EINER VERBESSERTEN KONTROLLE DER RADIALGESCHWINDIGKEIT DES GASES
DISTRIBUTEUR DE GAZ POUR UN SÉCHEUR CONVECTIF AVEC UN CONTROL AMELIORÉ DE LA VÉLOCITÉ RADIALE DU GAZ

(30) Priority: 24.10.2013 DK 201300610; 27.05.2014 DK 201400289
(43) Date of publication of application: 31.08.2016
(73) Proprietor: Spx Flow Technology Danmark A/S, 2860 Søborg (DK)
(72) Inventor: SCHØNFELDT, Henrik, DK-2820 Gentofte (DK); FRIDBERG, Christian Holm, DK-2730 Herlev (DK)
(74) Representative: Nordic Patent Service A/S
(86) International application number: PCT/EP2014/072815
(87) International publication number: WO 2015/059261

(56) References cited:
- WO-A1-2007/071238
- WO-A1-2011/047676
- GB-A- 2 003 042
- JP-A- 2000 262 601
- US-A- 2 835 597
- US-A- 5 137 696
- US-A- 5 227 018
- US-A1- 2008 105 754
- US-A1- 2011 107 912
- US-B1- 7 331 759

## Description

### Field of Invention

The present invention relates to the field of gas distributers or gas dispersers mounted on spray dryers, spray coolers, spray absorbers and similar equipment, collectively called convective dryers, wherein the gas or air dispersed or distributed may be e.g. atmospheric air or a specialty gas or mixture of specialty gasses and wherein the equipment collectively called convective dryers are useful in many diverse technical fields wherein it is desired to produce a powdery material from an atomized liquid containing one or more substances to be dried and retrieved as a powdery, agglomerated, coated, or granulated material.

### Background of the Invention

A convective dryer is an apparatus that produces dry powdery substances from an atomized liquid where atomized droplets are dried or solidified within a processing chamber by convective heat and often mass transfer with a fluid. This process takes place in a confined space. The processing chamber is usually called a drying chamber. In case of a spray dryer, the liquid feed is atomized using an atomization device such as a rotary atomizer, a pressure nozzle or a multi-fluid nozzle, and mixed with a drying gas typically in the temperature range of -50-800°C. The dry powdery substance can be e.g. a powder, an agglomerated powdery substance, a coated powdery substance or a granulated substance; which are all examples of products the skilled person knows may result from drying an atomizing liquid capable of forming such a powdery substance.

In order to avoid product build-up, or deposits, on the walls of the drying chamber, and hence to maintain capacity, controlled inlet conditions for the gas are required. The gas may be any gaseous phase fluid, but is often air, nitrogen, or steam. Often a dedicated component called a gas or an air distributer is used as component for directing the gas appropriately into the drying chamber, taking into account the selected means of atomization, by ensuring a proper gas velocity profile suitable for the convective dryer.

By the term "gas distributer" or "air distributer" as used herein is meant any disperser or distributer supplied with a drying gas to be used in a convective dryer. A skilled person will know that the term "gas" may be taken to cover any single component gas, such as e.g. molecular nitrogen or argon, as well as any mixture of gases such as is found in e.g. air or steam. The present invention is hence not limited by any particular choice of the drying gas intended for distribution by the gas distributer. The skilled person will further know that air or steam is often used as the drying gas when the liquid to be atomized is an aqueous solution, while an inert gas is used when the liquid to be atomized is a non-aqueous solution. Consequently, the term "drying gas" covers any drying gas, which may be used in a convective dryer.

The gas distributer can be of any type known to the skilled person but may e.g. be in the shape of a bend duct type, a plenum type or a scroll type with each type potentially having area contractions and expansions. The gas distributer may encapsulate or include the atomizing means, in particular an atomizer, or be decoupled from the atomizing means.

As the gas velocity into the chamber is higher than the average chamber gas velocity, a drying gas jet is formed extending from the gas distributer exit surface and into the chamber. The drying gas jet has a center core that protrudes a certain distance into the chamber while continuously mixing with the surroundings, eventually becoming fully mixed with the surrounding gas.

The velocity field of the drying gas jet can be described in terms of its axial, tangential and radial gas velocity components. The axial gas velocity component is aligned with the center axis of the gas distributer; the tangential gas velocity component defines the rotational velocity component of the gas with respect to the center axis of the gas distributer while the radial velocity component defines a direction of gas movement perpendicular to the axial and tangential velocity components. The axial gas velocity component carries the gas into the chamber, the tangential velocity aids in breaking up the inlet jet, while the radial component controls direction stability.

As such no single preferred value for the tangential velocity is given in the art; rather it is dependent on e.g. atomizing means and chamber geometry. The tangential velocity may be influenced by the presence of guide vanes such that when these guide vanes are properly installed, a rotation of the drying gas flow is obtained. In the art it is known to use guide vanes which may be straight or curved or a combination hereof.

The radial velocity component as described above is the object of the present invention. The present inventors have now realized that for high capacity, low deposit convective drying it is preferable that the drying gas jet should be aligned best possible with the axis of the gas distributer with the radial gas velocity components being low or zero. This ensures that as much as possible of the dryer volume is utilized, keeping the wet product away from the walls with reduced risk of deposits on the walls. As the jet by nature is unstable it is not possible to remove all instabilities, but using the teaching of the present invention, an improved jet is produced being additionally concentrated along the main jet axis compared to jets prepared by conventional gas distributers.

In a further development of the present invention, a drying gas jet which has been aligned best possible with the axis of the gas distributer and thus having a radial gas velocity component which is low or zero, is imparted with a controlled increment in its radial gas velocity component to create a drying gas jet having a controlled radial gas velocity.

In the art (FR 1.289.817) it is known to use perforated plates in gas distributers in order to smooth the gas flow using the pressure drop across the plate and hence obtain a more uniform distribution of the gas. Such perforated plates, which generally are much thinner than the average diameter of the holes in the perforated plates, influence primarily the axial velocity components and in minor degree the tangential and the radial components of the velocity field of the jet.

Also known in the art (DE 10 2008 017 461 A) is the use of flow aligners having a hexagonal honeycomb structure. Herein honeycomb flow aligners are used for smoothing gas flow with relation to both its radial and tangential vectorial velocity components for freezing gases in a counter flow spray dryer operating by liquid sublimation close to the condensation temperatures of the involved gasses, i.e. significantly below 250 K and at very low gas circulation velocities of 0.05 to 0.1 m/s. In such systems as are known in the art, gas jets do not form.

However, the use of such perforated plates has been shown to cause difficulties with respect to keeping the drying chamber clean. Especially, when the convection dryer is to be used in the food or pharmaceutical industry the sanitary aspects of the production design are very important. It is an objective of the present invention to improve the prior art such that this recognized problem displayed by prior art perforated plates in gas distributers is minimized or eliminated.

Also well known in the art (WO 2007/071238, WO 2011/047676) is utilizing one or more guide vanes assembled within the gas distributer to regulate the flow path and velocity of its constituent velocity components, particularly the tangential velocity components, before contacting the drying gas with the atomized liquid.

Also known in the art (GB 2 003 042 A) is the use of an air distributer plate or gas distributor for distributing air or gas into a drying chamber. Herein the air distributor plate comprises a number of elongated first tubular nozzles and a number of smaller second tubular nozzles. Atomizing nozzles are mounted in the first tubular nozzles by use of radial planar elements. Each first tubular nozzle may then serve as a guide vane, which has a single tangential guide vane formed around a center axis by the cylinder wall within the tube, and which has radial guide vanes formed by the planar elements holding the atomizing nozzle. Thus, the first tubular nozzles only has a single tangential vane formed around the center axis, and the effect of the radial planar elements on the gas velocity components of the drying gas jet is very limited.

However, none of these assemblies of guide vanes have achieved the low radial velocities intended by the present invention.

The benefits of the present invention are explained below in further detail.

### Summary of the Invention

The present invention relates to a convective dryer for, and a method of, controlling the velocity profile of a drying gas in a convective dryer, particularly the radial velocity profile of the drying gas, by creating an advantageous velocity profile of the drying gas prior to introducing the drying gas into the convective dryer chamber. The invention is described in the claims.

The velocity profile may have different requirements depending on the convective process, chamber dimensions and atomizing means, but common gas distributer targets may be defined, such as an advantageous velocity distribution and axial alignment.

The inventors have become aware of the importance of reducing uncontrolled or random radial velocity components in order to achieve improvement of the mixing profile while at the same time utilizing as much of the dryer volume as possible and simultaneously keeping any wet product away from the dryer walls, thereby reducing the risk of deposits on the walls. Hence, the invention comprises a gas distributer for a convective dryer configured to produce a drying gas jet in a drying chamber of a convective dryer, said drying gas jet having low or zero radial gas velocity; and a method of controlling the velocity profile in a convective dryer using a gas distributer capable of achieving this goal.

In the context of the present invention, the term gas jet shall be understood as a stream of gas having an exit velocity at the exit from the gas distributer of at least 1 m/s. Preferably, the exit velocity is larger than 5 m/s and even more preferably, the exit velocity is larger than 10 m/s. If the convective dryer is operated with a counter flow of drying gas, the exit velocity shall be understood as an excess velocity relative to the flow velocity of the counter flow.

While convective dryers may operate at a large interval of temperatures, it is contemplated that the convective dryers of the present invention are supplied with drying gas having a temperature in excess of -25°C, preferably in excess of 0°C, and more preferably in excess of 25°C.

In general, as the exit velocity and the drying gas temperature are increased, the constructive requirements on the gas distributer are also increased.

In the context of the present invention, the term low or zero radial gas velocity is to be understood to mean that the maximal radial gas velocity of an drying gas jet in a drying chamber compared to the average axial gas velocity in the drying chamber is smaller by at least a factor of 4, at least a factor of 8, preferably by at least a factor of 16 and more preferably by at least a factor of 32. Due to the inherent difficulty in measuring radial gas velocities in drying gas jets, it is sufficient for considering the target of the present invention achieved if the target is confirmed within reasonable accuracy using computational continuum simulation tools, e.g. by simulating the velocity profile of a gas in a convective dryer of the present invention or in a convective dryer comprising a gas distributer according to the present invention using the CD-Adapco Star-ccm+ software (2013-build).

The present inventors have discovered that the above goal advantageously can be achieved by the provision of a flow aligner adaptable to be installed into the flow path of a drying gas within an gas distributer for a convective dryer, said flow aligner having a plurality of flow channels, said plurality of flow channels organized to form a mesh or mesh-like structure and so dimensioned that a low or zero radial velocity of the drying gas upon exit of the gas distributer is obtained

### Brief Description of the Drawings

Figure 1 shows a convective dryer with a gas distributer and a flow aligner according to the invention. Figure 1a shows a sideways view of the convective dryer whereas Figure 1b shows a top view of the convective dryer along an axis centered on the gas distributer.
Figure 2 shows a diagrammatic representation of three different mesh or mesh-like structures for use in a flow aligner according to the invention.
Figure 3 shows a diagrammatic representation of a flow aligner having a circular-like mesh or mesh-like structure.
Figure 4 shows a diagrammatic representation of a flow aligner having a circular-like mesh or mesh-like structure adapted to impart a controlled radial gas velocity to a drying gas jet.

### Detailed Description of the Invention and of Preferred Embodiments

As described above, the provision of a drying gas jet for a convective dryer having improved radial control and axial alignment at the exit surface of an associated gas distributer is central to the present invention.

The present inventors have realized that an improvement to jet stability and alignment can be achieved in a simple manner by inserting a flow aligner according to the present invention into the flow path of the drying gas, wherein the flow aligner can be located within said gas distributer or upstream of said gas distributer. E.g. a flow aligner according to the present invention may be positioned in a system for convective drying or in a convective dryer upstream of said gas distributer, e.g. between atomizing means and heater, cooler, filter, mixing insert or valve and still result in the beneficial influence on the radial velocity component of the drying gas flow. Hence a further object of the present invention is to provide a flow aligner for a gas distributer resulting in a low or zero radial drying gas velocity upon exit of said gas distributer and into said drying chamber as a drying gas jet.

Accordingly, the present invention relates to a convective dryer (100) according to claim 1.

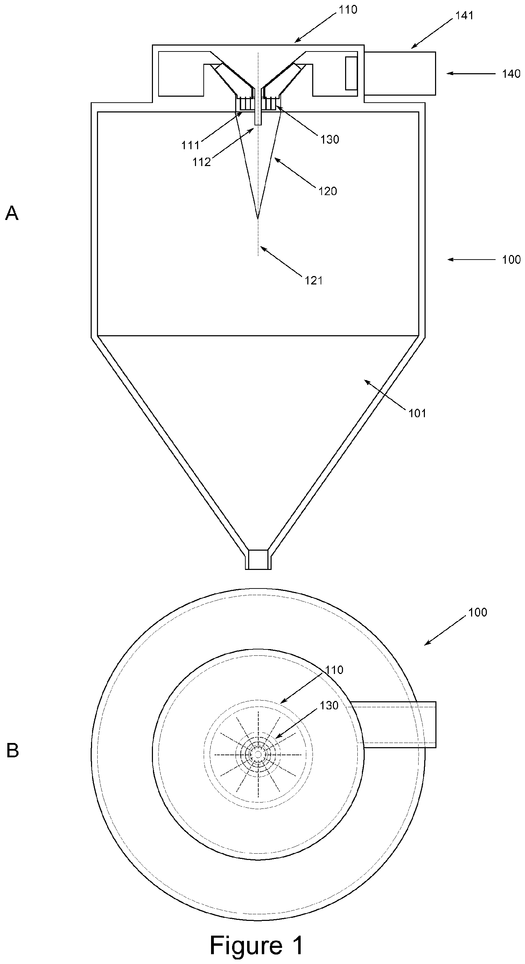

In Figure 1 an exemplary, but non-limiting, convective dryer (100) according to the invention is described. The convective dryer (100) comprises a drying chamber (101), a gas distributer (110), atomizing means (112) and a flow aligner (130) . In the figure, a drying gas exits a flow conduit (141) and enters the gas distributer (110) at a point along the flow path (140) of the drying gas. In the gas distributer (110) the drying gas is directed into the drying chamber (101) and further, the drying gas is passed through a flow aligner (130) of the present invention. The drying gas forms a gas jet (120) in the drying chamber (101) upon exiting the gas distributer (110) and flow aligner (130) at an exit surface (111), wherein gas distributer (110), flow aligner (130) and the gas jet (120) are now aligned to create a common center axis (121). In the shown embodiment the atomizing means (112) are also aligned along the common center axis (121) just described.

In an embodiment according to the invention, said gas distributer (110) is configured to reduce or minimize the radial velocity component in said drying gas jet (120) velocity field. According to the invention, said gas distributer (110) comprises a flow aligner (130,310,320), said flow aligner (130,310,320) mounted into a flow path (140) of said drying gas either inside said gas distributer (110) or upstream from said gas distributer (110), said flow aligner (130,310,320) configured to reduce said radial gas velocity component of said velocity field to low or zero radial gas velocity.

Further, the present invention describes a gas distributer (110) for directing a drying gas jet (120) into a drying chamber (101) of a convective dryer (100), said convective dryer (100) configured for producing a powdery substance from an atomized liquid, said gas distributer (110) configured to generate a drying gas jet (120) protruding from an exit surface (111) of the gas distributer (110) into said drying chamber (101), said drying gas jet (120) having a center axis aligned with an axis of said gas distributer (110) essentially perpendicular to said gas distributer exit surface (111); said drying gas jet characterizable by a gas velocity field; said gas velocity field having an axial gas velocity component, a tangential gas velocity component and a radial gas velocity component, with said axial gas velocity component carrying said drying gas into said drying chamber (101); wherein said gas distributer (110) is configured to reduce or minimize the radial gas velocity component in said gas velocity field.

The gas distributer (110) may be in the shape of a bend duct type gas distributer, a plenum type, or a scroll type, and may have area contractions and expansions. The gas distributer may encapsulate or include the atomizing means or can be decoupled from the atomizing means.

In an embodiment according to the present invention the gas distributer (110) comprises a flow aligner (130,310,320,410), said flow aligner to be inserted into the flow path (140) of said drying gas either internally in said gas distributer (110) or upstream from said gas distributer, said flow aligner defining a plurality of flow channels (211,221,231,241) for minimizing a radial gas velocity component in the flow field of the drying gas jet (120), said plurality of flow channels (211,221,231,241) organized to form a mesh or mesh-like structure (210,220,230,240) and so dimensioned that a low or zero radial velocity of said drying gas upon exit from said gas distributer (110) is obtained after passing said drying gas through said plurality of flow channels (211,221,231,241).

In the context of the present invention a mesh or a mesh-like structure (210,220,230,240) is to be understood as a 3-dimensional structure or construction, which influences the gas flow velocity field of a drying gas passing through the mesh or mesh-like structure by reducing the radial gas velocity component to a low value or zero during passage. It may be tubular in construction, such that the drying gas passes through a plurality of tubes during its passage of the mesh or mesh-like structure. It can also be constructed from a plurality of guide vanes having an extension along the direction of said center axis (121), the guide vanes having at least one axis aligned substantially parallel to said center axis. The mesh or mesh-like structure (210,220,230,240) may also be constructed from a plurality of sets of guide vanes, each set of guide vanes having an extension along the direction of said center axis and each set of guide vanes being differently radially oriented with respect to the center axis within the mesh or mesh-like structure.

To best observe said mesh or mesh-like structure (210,220,230,240), said flow aligner (130,310,320) can be observed along said center axis (121). Said mesh or mesh-like structure (210,220,230,240) will now be observable as the projection area visible on a projection plane spanned by the tangential and the radial gas velocity components of said gas velocity field. A characteristic length scale (**δ**) can now be defined, herein called the radial distance (**δ**), which is the maximum distance between two walls of a mesh observed by projection as described above when measured from said center axis (121) along a straight line connecting said center axis (121) to an outer rim (215,225,235,245) of said flow aligner (130,310,320).

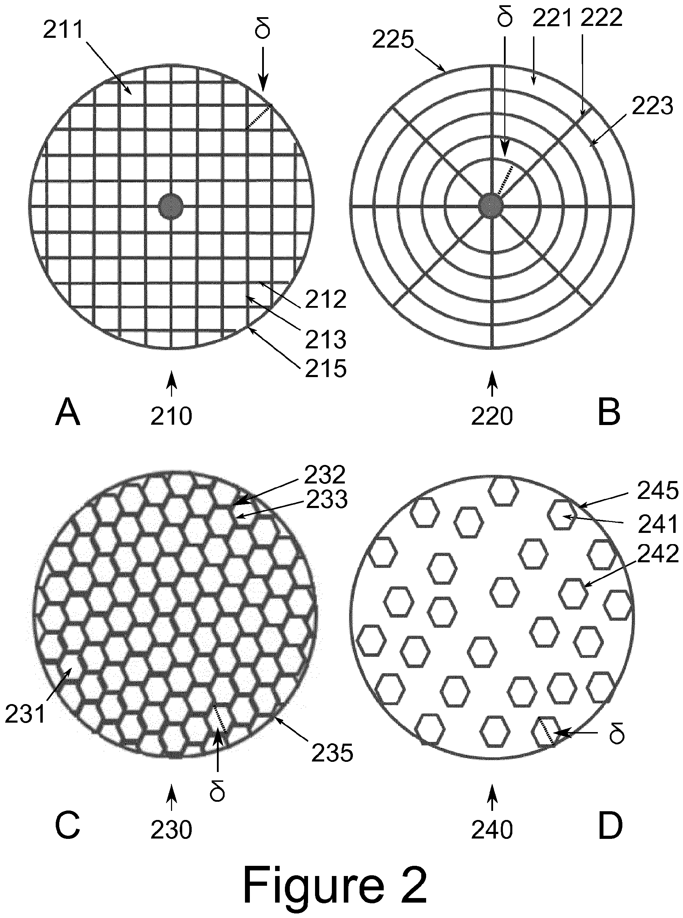

Figure 2 shows a diagrammatic representation of three different mesh or mesh-like structures (210,220,230,240) for use in a flow aligner (130,310,320,410) according to the invention. Figure 2a shows the projection area of a flow aligner having a square-like mesh or mesh-like structure (210). Figure 2b shows the projection area of a flow aligner having a circular-like mesh or mesh-like structure (220). Figure 2c shows the projection area of a flow aligner having a honeycomb-like mesh or mesh-like structure (230) and Figure 2d shows the projection area of a flow aligner having a honeycomb-like mesh or mesh-like structure (240) without fines in the middle. The value **δ** is a characteristic length of the flow aligner as explained above. The flow channels (211,221,231,241) created by the mesh or mesh-like structures have been indicated on the figures in an exemplary manner. Further it has been indicated in the figures the location of exemplary guide vanes (212,213,222,223,232,233) or tubes (242) in a non-limiting manner as described below.

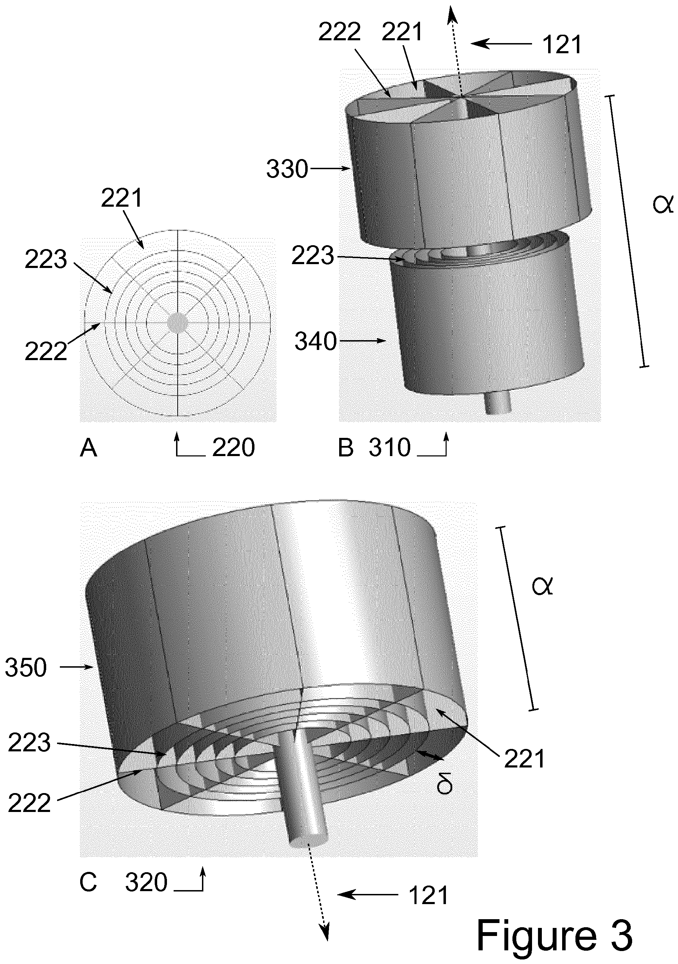

Figure 3 shows a diagrammatic representation of a flow aligner having a circular-like mesh (320) or circular-like mesh-like (310) structure. The value **α** is a characteristic length of the flow channels which is defined by the length the flow channel (211,221,231,241) measured along the center axis (121). The construction examples shown are exemplary for the flow aligners of the invention and the skilled person will easily deduct from the figures in combination with the below descriptions how to assemble flow aligners of other mesh types.

To assemble the flow aligners (310,320) of Figure 3 a plurality of tangential guide vanes (223) in the form of rings or cylinders are assembled concentrically around the center axis (121) of the flow aligner and combined with a plurality of radial guide vanes (222), these radial guide vanes serving like spokes in a wheel. In the flow aligner (310) of Figure 3b, the radial (222) and tangential (223) guide vanes are separated along the center axis of the flow aligner (310) into a first layer (340) and a second layer (330); whereas in the flow aligner (320) of Figure 3c the radial (222) and tangential (223) guide vanes are connected into a single first layer (350) thereby forming tubes. The resulting flow channels (221) are indicated with reference to the two-dimensional projection of the constructed flow aligners of figure 3a.

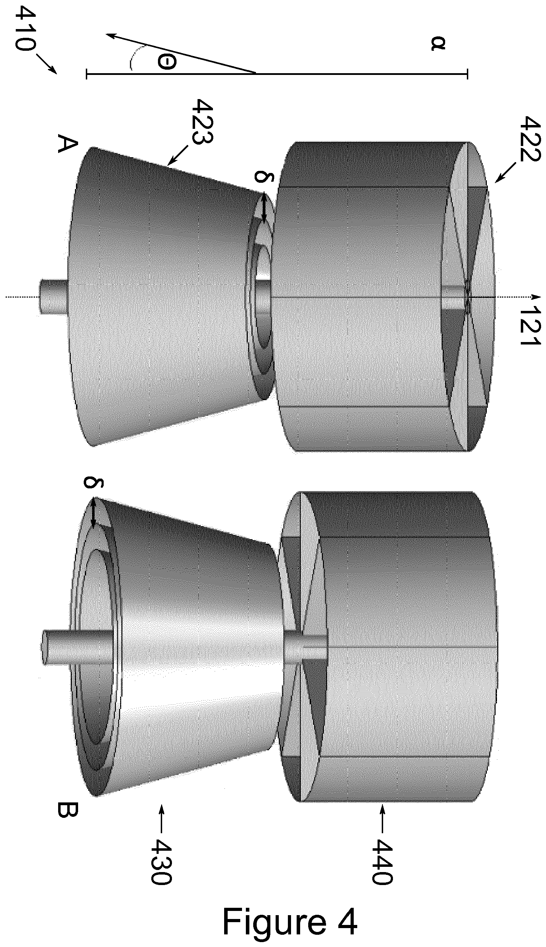

Figures 4A and 4B show a diagrammatic representation of a flow aligner (410) having a circular-like mesh or mesh-like structure adapted to impart a controlled radial gas velocity to a drying gas jet (120).

The flow aligner (410) having a circular-like mesh or mesh-like structure adapted to impart a controlled radial gas velocity to a drying gas jet (120) of the embodiment shown in the figures is constructed in parallel to the flow aligner (310) shown in figure 3b. It has a first layer (440) and a second layer (430) which separates radial (422) and tangential (423) guide vanes along the center axis (121) of the flow aligner (410). However, the tangential guide vanes (423) are now no longer ring or cylinder shaped, rather they form cut-off cones which have been spaced apart by said characteristic distance **δ**, to form a second layer of conically shaped tangential guide vanes (423) arranged concentrically around said center axis (121). Depending on the inclination angle (**Θ**) which said conically shaped tangential guide vanes (423) form to said center axis (121), a smaller or larger radial gas velocity is controllably imparted to said drying gas jet (120).

The flow aligner (410) having a circular-like mesh or mesh-like structure adapted to impart a controlled radial gas velocity to a drying gas jet (120) may also be constructed as a combination of the embodiment shown in Figure 3c with a first layer (350) of combined radial (222) and tangential (223) guide vanes and a second layer (430) constructed as described above. Likewise, it is possible to construct the flow aligner (410) having a circular-like mesh or mesh-like structure adapted to impart a controlled radial gas velocity to a drying gas jet (120) in parallel to the flow aligner (240) of figure 2D by allowing each throughgoing opening or flow channel (241) of the embodiment in figure 2D to form said inclination angle (**Θ**) with said center axis (121).

By constructing the flow aligner (410) having a circular-like mesh or mesh-like structure adapted to impart a controlled radial gas velocity to a drying gas jet (120) as described above, improved radial gas velocity control is achieved by reducing the radial gas velocity to low or zero radial gas velocity in a first section of said flow aligner and in a second section imparting a controlled radial gas velocity.

In some embodiments it will be advantageous to construct the flow aligners (130,310,320,410) of the present invention with one or more throughgoing passages, these one or more throughgoing passages traversing said mesh or mesh-like structure (210,220,230,240) comprised in said flow aligners (130,310,320,410) in the direction of said drying gas flow (140), these one or more throughgoing passages having a diameter larger than the characteristic radial length (**δ**) associated with said mesh or mesh-like structure (210,220,230,240) comprised in said flow aligner (130,310,320,410) also comprising said one or more throughgoing passages. This is e.g. shown in the flow aligner (130) comprising the atomizer (112) of Figure 1.

When constructing such one or more throughgoing passages in a flow aligner (130,310,320,410) of the present invention it is advantageous that said passages are circular, and describable by a single diameter, but this is not limiting on the invention. Other geometrical shapes of said one or more throughgoing passages are equally useful and available to the skilled person as a matter of experience.

The advantage of this embodiment is to allow the instalment of further equipment, such as but not limited to, atomizers and/or additional air nozzles of interest in the art of convective drying, when this further equipment is of a size which is too large to fit within a single mesh of said mesh or mesh-like structure in said flow aligner. By ascertaining that the combined surface area of the one or more throughgoing passages installed into said flow aligner is sufficiently smaller than the surface area of the mesh or mesh-like structure of the present invention the benefits otherwise obtained from using the present invention are not lost. Further, it is advantageous to install such one or more throughgoing passages closer to the center axis (121) than to the aforementioned rim (215,225,235,245) of said mesh or mesh-like structure (210,220,230,240) in said flow aligner (130,310,320,410).

In parallel to the construction of the circular-like flow aligner (310,320) another mesh or mesh-like structure, either constructed from a plurality of tubes (242) or from a plurality of guide vanes (232,233), could be a honeycomb structure (230,240). The honeycomb structure (230,240) could be preassembled as a tubular structure or assembled as a layered structured from at least two layers each presenting a plurality guide wanes (232,233) in the form of zigzag walls (232,233) and wherein the two layers are oriented at an angle to each other such that an essentially honeycomb-like structure is created when the projection area of the assembled flow aligner (130,310,320) onto the plane defined by the tangential and the radial gas velocity components is observed.

In order to assemble a flow aligner (130,310,320,410) according to the present invention, numerous options are available to the skilled person such as but not limited to e.g. welding, soldering, extrusion, molding, insertion of pre-fitted parts into each other, water cutting, laser cutting, drilled, casted, glued, 3D printed. Also the skilled person will know to select appropriate materials for the manufacture of the flow aligner according to the specific needs of the gas distributer. Such materials could be, but not limited to, e.g. stainless steel, sheet metal or plastics.

Also possible are gas distributers (110) wherein a plurality of tubular and/or a plurality of guide vanes structure elements of any shape are bundled together into smaller insert substructures which are subsequently assembled to form a larger flow aligner (310) according to the present invention and fitting the dimensions of the gas distributer (110) wherein the larger flow aligner (310) is intended to be installed.

The present inventors have discovered that it is advantageous for achieving an appropriate radial velocity control that the said flow channels (211,221,231,241) have an axial length (**α**) and a radial distance (**δ**), such that said flow channels can be characterized by an axial length (**α**) to radial distance (**δ**) ratio (DR) of 2 ≤ *DR,* preferably 3 ≤ *DR*, more preferably 4 ≤ *DR*, more preferably 3 ≤ *DR* ≤ 100, more preferably 3 ≤ *DR* ≤ 50, more preferably 3 ≤ *DR* ≤ 20, most preferably 4 ≤ *DR* ≤ 20.

In an embodiment of the flow aligner (130,310,320,410) according to the present invention the plurality of flow channels (211,221,231,241) forming said mesh or mesh-like structure (210,220,230,240) is a plurality of tubes or a plurality of guide vanes or a combination thereof. The plurality of tubes or plurality of guide vanes or combination thereof can either be connected or organized in layers, preferably at least two layers, more preferably two layers. When said flow aligner (130,310,320,410) comprises more than two layers, e.g. a first layer (340) and a second layer (330); a sequence of layers can be envisaged such as e.g. a first first layer (340), a first second layer (330), a second first layer (340), a second second layer (330) and so forth. Further structural variations can easily be envisaged by the skilled person.

In another embodiment said plurality of guide vanes (212,213,222,223,232,233,423) are oriented radially and tangentially with respect to said velocity field thereby forming a set of radial guide vanes and tangential guide vanes. In one embodiment, the radial guide vanes may be angled for imparting the drying gas flow a tangential direction. In a further embodiment said tangential guide vanes may be formed as a set of rings or cylinders (223) and/or straight guide vanes (222). In yet another embodiment multiple sets of straight guide vanes (212,213) are assembled into a cross pattern having an angle with respect to the axial gas velocity component axis.

The plurality of flow channels (211,221,231,241) of the present invention may in one embodiment form a rounded or a polygonal structure or a combination thereof in particularly the plurality of flow channels (211,221,231,241) may form a honeycomb structure (231,241). In particular a combination of separate guide vanes (232,233) may be oriented radially and tangentially to form an axially stretched honeycomb (231).

In a further embodiment of the present invention, the plurality of tubes or guide vanes (212,213,222,223,232,233,242,423) may be manufactured from a metal or from a plastic and can be extruded, point wise or fully welded, or loosely assembled to form an assembled flow aligner (130,310,320) within said gas distributer (110).

To exemplify the present invention a honeycomb structured flow aligner (230) was simulated using the CD-Adapco Star-ccm+ software (2013-build). The approximate pressure loss across the honeycomb structure was Δp = 10mmWG, the equivalent diameter ≤ 20mm and the axial length (α) to radial distance (δ) ratio, DR ≥ 3. The honeycomb construction guides both the tangential and the radial velocity components independently with the purpose of reducing the radial gas velocity components while allowing a given amount of tangential gas velocity to be maintained for improved mixing. When DR is larger than 2, preferably larger than 3, most preferably larger than 4, the benefits of the present invention are achieved.

The present invention also relates to a method for controlling the gas velocity field of a drying gas jet (120) protruding from a gas distributer (110) into a drying chamber (101) of a convective dryer (100), said gas velocity field comprising an axial gas velocity component, a tangential gas velocity component and a radial gas velocity component, said method comprising minimizing said radial gas velocity component such that said radial gas velocity of said gas jet (120) is low or zero.

In one preferred embodiment, the gas distributer (110) comprises a flow aligner (130,310,320). In a most preferred embodiment said flow aligner (130,310,320) has an axial length (α) and comprises a plurality of tubes or guide vanes(212,213,222,223,232,233,242,423), said plurality of tubes or guide vanes organized to form a mesh or mesh-like structure (210,220,230,240) having a plurality of openings (211,221,231,241), said tubes or guide vanes being so dimensioned that a low or zero radial gas velocity of said drying gas upon exit from said gas distributer (110) is obtained after passing said drying gas through said plurality of tubes or guide vanes.

The present invention in particular also relates to a method for controlling the gas velocity field of a drying gas jet (120) protruding into a drying chamber (101) of a convective dryer (100) from an exit surface (111) of a gas distributer (110), said gas distributer (110) comprising a flow aligner (130,310,320), said flow aligner comprising flow channels (211,221,231,241), said flow aligner defining an axial length (**α**) and a radial distance (**δ**), wherein said flow channels are characterized by an axial length (α) to radial distance (δ) ratio (DR) of 2 ≤ *DR,* preferably 3 ≤ *DR,* more preferably 4 ≤ *DR,* more preferably 3 ≤ *DR* ≤ 100, more preferably 3 ≤ *DR* ≤ 50, more preferably 3 ≤ *DR* ≤ 20, most preferably 4 ≤ *DR* ≤ 20.

Finally, the present invention relates to the use of a method for controlling the gas velocity field of a drying gas jet (120) protruding from a gas distributer (110) into a drying chamber (101) of a convective dryer (100) as described above for producing a powdery substance, such as e.g. a powder, an agglomerated powdery substance, a coated powdery substance or a granulated substance from an atomizing liquid capable of forming a such powdery substance in a convective dryer (100) and a powdery substance produced from an atomizing liquid containing a material capable of forming a powdery substance in a convective dryer (100) using a method as described above.

Although the teaching of this application has been described in detail for purpose of illustration, it is understood that such detail is solely for that purpose, and variations can be made therein by those skilled in the art without departing from the scope of the teaching of this application.

The term "comprising" as used in the claims does not exclude other elements or steps. The term "a" or "an" as used in the claims does not exclude a plurality.

## Claims

1. A convective dryer (100) comprising a gas distributor (110) and a drying chamber (101), said convective dryer configured for producing a powdery substance from an atomized liquid and being selected from the group comprising spray dryers, spray coolers, and spray absorbers, said gas distributer (110) configured to generate a drying gas jet (120) protruding from an exit surface (111) of said gas distributer (110) into said drying chamber (101); wherein said gas distributer (110) comprises a flow aligner (130,310,320,410), said flow aligner (130,310,320,410) defining a plurality of flow channels (211,221,231,241) configured to reduce or minimize a radial gas velocity component of said drying gas jet (120) to low or zero radial gas velocity,
wherein said plurality of flow channels (211,221,231,241) in said flow aligner (130,310,320,410) is a plurality of guide vanes (212, 213, 222, 223, 232, 233, 242, 423);
**characterized in that** said plurality of guide vanes (212,213,222,223,232,233,422,423) are organized to form a mesh or mesh-like structure (210,220,230,240), wherein said plurality of guide vanes (212,213,222,223,232,233,422,423) in said flow aligner (130,310,320,410) form a set of radial guide vanes (222,422) and tangential (223,433) guide vanes with reference to the axis of the gas distributer, wherein the set of radial (222, 422) and tangential (223, 433) guide vanes comprises a plurality of tangential (223, 433) guide vanes in the form of cylinders being assembled concentrically around the center axis (121) of the flow aligner (130, 310, 320, 410) and combined with a plurality of radial guide vanes (222).

2. A convective dryer (100) according to claim 1, wherein said flow aligner (130,310,320,410) defines an axial length (**α**) and a radial distance (**δ**) and said plurality of flow channels (211,221,231,241) are **characterized by** an axial length (**α**) to radial distance (**δ**) ratio (DR) of 2 ≤ *DR*, preferably 3 ≤ *DR.*

3. A convective dryer (100) according to claim 1 or 2, wherein said flow aligner (130,310,320,410) defines an axial length (**α**) and a radial distance (**δ**) and said plurality of flow channels (211,221,231,241) are **characterized by** an axial length (**α**) to radial distance (**δ**) ratio (DR) of 4 ≤ *DR.*

4. A convective dryer (100) according to claim 1, 2 or 3, wherein said plurality of guide vanes (212,213,222,223,232,233,422,423) in said flow aligner (130,310,320,410) are organized in layers (330,340,350,430,440), said plurality of guide vanes (212,213,222,223,232,233,422,423) in said flow aligner (130,310,320,410) preferably comprising at least one layer (330,340,350) or two layers (330,340,430,440).

5. A convective dyer (100) according to any of the claims 1 to 4, wherein said radial guide vanes (212,213,222,232,233,422) in said flow aligner (130,310,320,410) are angled for imparting the drying gas flow a tangential direction.

6. A convective dryer (100) according to any of the claims 1 to 5, wherein the plurality of guide vanes in said flow aligner (130,310,320,410) is manufactured from a metal or from a plastic or a combination thereof.

7. A convective dryer (100) according to any of the claims 1 to 6, wherein the plurality of guide vanes in said flow aligner (130,310,320,410) is drilled, cast, extruded, point wise or fully welded, or loosely assembled to form an assembled flow aligner (130,310,320) within said gas distributer (110).

8. A convective dryer (100) according to any of the claims 2 to 7, wherein said flow aligner (130,310,320,410) comprises one or more throughgoing passages, said one or more throughgoing passages traversing said mesh or mesh-like structure (210,220,230,240) comprised in said flow aligner (130,310,320,410) in the direction of said drying gas flow (140), said one or more throughgoing passages having a diameter larger than the characteristic radial distance (**δ**) associated with said mesh or mesh-like structure (210,220,230,240) comprised in said flow aligner (130,310,320,410) also comprising said one or more throughgoing passages.

9. A convective dryer (100) according to any of the claims 1 to 8, wherein said flow aligner (130,310,320,410) is located at said exit surface (111).

10. A convective dryer (100) according to any one of claims 1 to 9, comprising at least one atomizer.

11. A method for controlling the gas velocity field of a drying gas jet (120) protruding from a gas distributer (110) into a drying chamber (101) of a convective dryer (100) according to any of the claims 1 to 11, said gas velocity field comprising an axial gas velocity component, a tangential gas velocity component and a radial gas velocity component, said method comprising minimizing said radial gas velocity component such that said radial gas velocity of said gas jet (120) is low or zero.

## Patentansprüche

1. Konvektiver Trockner (100) umfassend einen Gasverteiler (110) und eine Trockenkammer (101), wobei der konvektive Trockner zur Herstellung einer pulverförmigen Substanz aus einer zerstäubten Flüssigkeit konfiguriert ist, und der aus der Gruppe ausgewählt ist, die Sprühtrockner, Sprühkühler und Sprühabsorber umfasst, wobei der Gasverteiler (110) konfiguriert ist, um einen Trockengasstrahl (120) zu erzeugen, der von einer Austrittsfläche (111) des Gasverteilers (110) in die Trockenkammer (101) austritt;
wobei der Gasverteiler (110) einen Strömungsausrichter (130, 310, 320, 410) umfasst, wobei der Strömungsausrichter (130, 310, 320, 410) mehrere Strömungskanäle (211, 221, 231, 241) definiert, die konfiguriert sind, um eine radiale Gasgeschwindigkeitskomponente des Trockengasstrahls (120) auf niedrige oder null radiale Gasgeschwindigkeit zu reduzieren oder minimieren, wobei die mehreren Strömungskanäle (211, 221, 231, 241) in dem Strömungsausrichter (130, 310, 320, 410) mehrere Leitbleche (212, 213, 222, 223, 232, 233, 242, 423) sind;
**dadurch gekennzeichnet, dass** die mehreren Leitbleche (212, 213, 222, 223, 232, 233, 422, 423) organisiert sind, um ein Netz oder eine netzartige Struktur zu bilden (210, 220, 230, 240),
wobei die mehreren Leitbleche (212, 213, 222, 223, 232, 233, 422, 423) in dem Strömungsausrichter (130, 310, 320, 410) einen Satz von radialen Leitblechen (222, 422) und tangentialen Leitblechen (223, 433) mit Bezug auf die Achse des Gasverteilers bilden,
wobei der Satz von radialen (222, 422) und tangentialen (223, 433) Leitblechen mehrere tangentiale (223, 433) Leitbleche in Form von Zylindern umfasst, die konzentrisch um die Mittelachse (121) des Strömungsausrichters (130, 310, 320, 410) angeordnet sind und mit mehreren radialen Leitblechen (222) kombiniert sind.

2. Konvektiver Trockner (100) nach Anspruch 1, bei dem der Strömungsausrichter (130, 310, 320, 410) eine axiale Länge (α) und einen radialen Abstand (δ) definiert, wobei die mehreren Strömungskanäle (211, 221, 231, 241) durch ein Verhältnis (DR) von axialer Länge (α) zu einem radialen Abstand (δ) von 2 ≤ DR, vorzugsweise 3 ≤ DR, gekennzeichnet sind.

3. Konvektiver Trockner (100) nach Anspruch 1 oder 2, wobei der Strömungsausrichter (130, 310, 320, 410) eine axiale Länge (α) und einen radialen Abstand (δ) definiert, wobei die mehreren Strömungskanäle (211, 221, 231, 241) durch ein Verhältnis (DR) von axialer Länge (α) zu einem radialen Abstand (δ) von 4 ≤ DR gekennzeichnet sind.

4. Konvektiver Trockner (100) nach Anspruch 1, 2 oder 3, wobei die mehreren Leitbleche (212, 213, 222, 223, 232, 233, 422, 423) in dem Strömungsausrichter (130, 310, 320, 410) in Schichten (330, 340, 350, 430, 440) organisiert sind, wobei die mehreren Leitbleche (212, 213, 222, 223, 232, 233, 422, 423) in dem Strömungsausrichter (130, 310, 320, 410) vorzugsweise mindestens eine Schicht (330, 340, 350) oder zwei Schichten (330, 340, 430, 440) umfassen.

5. Konvektiver Trockner (100) nach einem der Ansprüche 1 bis 4, wobei die radialen Leitbleche (212, 213, 222, 232, 233, 422) in dem Strömungsausrichter (130, 310, 320, 410) gewinkelt sind, um der Trockengasströmung eine tangentiale Richtung zu verleihen.

6. Konvektiver Trockner (100) nach einem des Ansprüche 1 bis 5, wobei die mehreren Leitbleche in dem Strömungsausrichter (130, 310, 320, 410) aus einem Metall oder aus einem Kunststoff oder einer Kombination davon hergestellt sind.

7. Konvektiver Trockner (100) nach einem der Ansprüche 1 bis 6, wobei die mehreren Leitbleche in dem Strömungsausrichter (130, 310, 320, 410) gebohrt, gegossen, extrudiert, punktweise oder vollständig verschweißt oder lose zusammengebaut sind, um einen zusammengebauten Strömungsausrichter (130, 310, 320) in dem Gasverteiler (110) zu bilden.

8. Konvektiver Trockner (100) nach einem der Ansprüche 2 bis 7, wobei der Strömungsausrichter (130, 310, 320, 410) eine oder mehrere Durchtrittsöffnungen umfasst, wobei die eine oder mehreren Durchtrittsöffnungen das Netz oder die netzartige Struktur (210, 220, 230, 240) in dem Strömungsausrichter (130, 310, 320, 410) in der Richtung der Trockengasströmung (140) durchqueren, wobei die eine oder mehreren Durchtrittsöffnungen einen Durchmesser aufweisen, der größer ist als der charakteristische radiale Abstand (δ) des Netzes oder der netzartigen Struktur (210, 220, 230, 240), die in dem Strömungsausrichter (130, 310, 320, 410) enthalten sind, der auch die eine oder mehreren Durchtrittsöffnungen umfasst.

9. Konvektiver Trockner (100) nach einem der Ansprüche 1 bis 8, wobei der Strömungsausrichter (130, 310, 320, 410) an der Austrittsfläche (111) angeordnet ist.

10. Konvektiver Trockner (100) nach einem der Ansprüche 1 bis 9, der mindestens einen Zerstäuber umfasst.

11. Verfahren zum Steuern des Gasgeschwindigkeitsfeldes eines Trockengasstrahls (120) von einem Gasverteiler (110) in eine Trockenkammer (101) eines konvektiven Trockners (100) nach einem des Ansprüche 1 bis 11, wobei das Gasgeschwindigkeitsfeld eine axiale Gasgeschwindigkeitskomponente, eine tangentiale Gasgeschwindigkeitskomponente und eine radiale Gasgeschwindigkeitskomponente umfasst, wobei das Verfahren eine Minimierung der radialen Gasgeschwindigkeitskomponente umfasst, derart dass die radiale Gasgeschwindigkeit des Gasstrahls (120) niedrig oder null ist.

## Revendications

1. Séchoir à convection (100) comprenant un distributeur de gaz (110) et une chambre de séchage (101), ledit séchoir à convection étant configuré pour produire une substance pulvérulente à partir d'un liquide atomisé et étant sélectionné dans le groupe comprenant des séchoirs à pulvérisation, des refroidisseurs à pulvérisation, et des absorbeurs à pulvérisation, ledit distributeur de gaz (110) étant configuré pour générer un jet de gaz de séchage (120) faisant saillie à partir d'une surface de sortie (111) dudit distributeur de gaz (110) dans ladite chambre de séchage (101) ; dans lequel ledit distributeur de gaz (110) comprend un aligneur d'écoulement (130, 310, 320, 410), ledit aligneur d'écoulement (130, 310, 320, 410) définissant une pluralité de canaux d'écoulement (211, 221, 231, 241) configurés pour réduire ou minimiser une composante de vitesse de gaz radiale dudit jet de gaz de séchage (120) à une vitesse de gaz radiale faible ou nulle,
dans lequel ladite pluralité de canaux d'écoulement (211, 221, 231, 241) dans ledit aligneur d'écoulement (130, 310, 320, 410) est une pluralité d'aubes directrices (212, 213, 222, 223, 232, 233, 242, 423) ;
**caractérisé en ce que** ladite pluralité d'aubes directrices (212, 213, 222, 223, 232, 233, 242, 423) sont organisées pour former une structure à mailles ou semblable à des mailles (210, 220, 230, 240), dans lequel ladite pluralité d'aubes directrices (212, 213, 222, 223, 232, 233, 242, 423) dans ledit aligneur d'écoulement (130, 310, 320, 410) forment un ensemble d'aubes directrices radiales (222, 422) et d'aubes directrices tangentielles (223, 433) par rapport à l'axe du distributeur de gaz,
dans lequel l'ensemble d'aubes directrices radiales (222, 422) et tangentielles (223, 433) comprend une pluralité d'aubes directrices tangentielles (223, 433) sous la forme de cylindres assemblés de façon concentrique autour de l'axe central (121) de l'aligneur d'écoulement (130, 310, 320, 410) et combinées avec une pluralité d'aubes directrices radiales (222).

2. Séchoir à convection (100) selon la revendication 1, dans lequel ledit aligneur d'écoulement (130, 310, 320, 410) définit une longueur axiale (α) et une distance radiale (δ) et ladite pluralité de canaux d'écoulement (211, 221, 231, 241) sont **caractérisés par** un rapport de longueur axiale (α) à une distance radiale (δ) (DR) de 2 ≤ DR, de préférence 3 ≤ DR.

3. Séchoir à convection (100) selon la revendication 1 ou 2, dans lequel ledit aligneur d'écoulement (130, 310, 320, 410) définit une longueur axiale (α) et une distance radiale (δ) et ladite pluralité de canaux d'écoulement (211, 221, 231, 241) sont **caractérisés par** un rapport de longueur axiale (α) à une distance radiale (δ) (DR) de 4 ≤ DR.

4. Séchoir à convection (100) selon la revendication 1, 2 ou 3, dans lequel ladite pluralité d'aubes directrices (212, 213, 222, 223, 232, 233, 242, 423) dans ledit aligneur d'écoulement (130, 310, 320, 410) sont organisées en couches (330, 340, 350, 430, 440), ladite pluralité d'aubes directrices (212, 213, 222, 223, 232, 233, 242, 423) dans ledit aligneur d'écoulement (130, 310, 320, 410) comprenant de préférence au moins une couche (330, 340, 350) ou deux couches (330, 340, 430, 440).

5. Séchoir à convection (100) selon l'une quelconque des revendications 1 à 4, dans lequel lesdites aubes directrices radiales (212, 213, 222, 232, 233, 422) dans ledit aligneur d'écoulement (130, 310, 320, 410) sont en angle pour conférer une direction tangentielle à l'écoulement de gaz de séchage.

6. Séchoir à convection (100) selon l'une quelconque des revendications 1 à 5, dans lequel la pluralité des aubes directrices dans ledit aligneur d'écoulement (130, 310, 320, 410) sont fabriquées à partir d'un métal ou d'un plastique ou d'une combinaison de ceux-ci.

7. Séchoir à convection (100) selon l'une quelconque des revendications 1 à 6, dans lequel la pluralité des aubes directrices dans ledit aligneur d'écoulement (130, 310, 320, 410) sont forées, moulées, extrudées, soudées complètement ou par points, ou assemblées de manière lâche pour former un aligneur d'écoulement assemblé (130, 310, 320) dans ledit distributeur de gaz (110).

8. Séchoir à convection (100) selon l'une quelconque des revendications 2 à 7, dans lequel ledit aligneur d'écoulement (130, 310, 320, 410) comprend un ou plusieurs passages traversants, lesdits un ou plusieurs passages traversants traversant ladite structure à mailles ou semblable à des mailles (210, 220, 230, 240) comprise dans ledit aligneur d'écoulement (130, 310, 320, 410) dans la direction dudit écoulement de gaz de séchage (140), lesdits un ou plusieurs passages traversants ayant un diamètre supérieur à la distance radiale caractéristique (δ) associée à ladite structure à mailles ou semblable à des mailles (210, 220, 230, 240) comprise dans ledit aligneur d'écoulement (130, 310, 320, 410) comprenant également lesdits un ou plusieurs passages traversants.

9. Séchoir à convection (100) selon l'une quelconque des revendications 1 à 8, dans lequel ledit aligneur d'écoulement (130, 310, 320, 410) est situé au niveau de ladite surface de sortie (111).

10. Séchoir à convection (100) selon l'une quelconque des revendications 1 à 9, comprenant au moins un atomiseur.

11. Procédé pour contrôler le champ de vitesse de gaz d'un jet de gaz de séchage (120) faisant saillie à partir d'un distributeur de gaz (110) dans une chambre de séchage (101) d'un séchoir à convection (100) selon l'une quelconque des revendications 1 à 11, ledit champ de vitesse de gaz comprenant une composante de vitesse de gaz axiale, une composante de vitesse de gaz tangentielle, et une composante de vitesse de gaz radiale, ledit procédé comprenant la minimisation de ladite composante de vitesse de gaz radiale de sorte que ladite vitesse de gaz radiale dudit jet de gaz (120) est faible ou nulle.
